# EUROPEAN PATENT SPECIFICATION

(11) **EP 3 719 356 B1**
(45) Date of publication and mention of the grant of the patent: **09.03.2022**
(21) Application number: 20168274.7
(22) Date of filing: 06.04.2020
(51) Int. Cl.: F16H 61/438, F16H 61/431

(54) **HYDROSTATIC TRANSMISSION FOR A WORK VEHICLE PROVIDED WITH A SYSTEM FOR REDUCING THE JERK DURING DIRECTION INVERSION MANOEUVRES**
HYDROSTATISCHES GETRIEBE FÜR EIN ARBEITSFAHRZEUG MIT SYSTEM ZUR RUCKVERMINDERUNG BEI RICHTUNGSUMKEHR
TRANSMISSION HYDROSTATIQUE POUR UN ENGIN DE TRAVAIL AVEC UN SYSTÈME DE REDUCTION DES SECOUSSES PENDANT UNE INVERSION DE DIRECTION

(30) Priority: 05.04.2019 IT 201900005160
(43) Date of publication of application: 07.10.2020
(73) Proprietor: CNH Industrial Italia S.p.A., 10135 Torino (IT)
(72) Inventor: Garramone, Adriano, 73100 Lecce (IT); Gravili, Andrea, CAP 73100 Lecce (IT); Liberti, Stefano, 73100 Lecce (IT); Venezia, Antonio, 10153 Torino (IT)
(74) Representative: CNH Industrial IP Department

(56) References cited:
- EP-A1- 2 716 939
- DE-A1-102016 200 257
- US-A1- 2004 003 590
- US-A1- 2006 150 624
- US-A1- 2012 152 641
- US-A1- 2016 257 538

## Description

The present invention relates in general to a work vehicle, such as for example a compact wheel loader, provided with a hydrostatic transmission.

Compact wheel loaders are compact vehicles that have road wheels and carry a working implement, in particular a bucket attached to a lift arm, that is hydraulically powered. The hydraulic pressure required to operate the working implement is produced by a hydraulic pump driven by an internal combustion engine (hereinafter simply referred to as engine) of the vehicle. The same engine is also used to drive the wheels, which are commonly powered by means of a hydrostatic transmission comprising a variable displacement hydraulic pump driven by the engine and a variable displacement hydraulic motor for driving the wheels, the hydraulic pump and the hydraulic motor of the hydrostatic transmission being hydraulically connected to each other.

A work vehicle of the above-mentioned type is typically provided with a FNR (Forward-Neutral-Reverse) switch, or other suitable control device, by means of which the operator is able to control inversion of the driving direction (hereinafter simply referred to as direction) of the vehicle from a current (forward or rearward) direction to a final (rearward or forward, respectively) direction opposed to the current one. A direction inversion manoeuvre requires that the displacement of the hydraulic pump be changed from a current (positive or negative, depending on whether the vehicle is moving forwards or rearwards) value to a final (negative or positive, respectively) value, passing through zero. Patent applications US2004/003590A1, US2012/152641A1, US 2006/150624A1, DE102016200257A1, EP2716939A1, US2016/257538A1 disclose different methods to increase the responsiveness and reduce the shock of the direction inversion. With the work vehicles currently available on the market, the jerk perceived by the operator during direction inversion manoeuvres is rather strong and may cause backache after several hours of use of the vehicle.

It is an object of the present invention to provide a hydrostatic transmission of the above-mentioned type that allows to carry out direction inversion manoeuvres reducing the jerk perceived by the operator, while ensuring anyway a quick completion of the manoeuvre.

This and other objects are fully achieved according to the present invention by virtue of a hydrostatic transmission for a work vehicle as set forth in independent claim 1, as well as by a method for controlling a hydrostatic transmission for a work vehicle during direction inversion manoeuvres as set forth in independent claim 6.

Advantageous embodiments of the invention are defined in the dependent claims, the subject-matter of which is to be intended as forming an integral part of the following description.

In short, the invention is based on the idea of providing a hydrostatic transmission comprising an electronic control unit for electronically controlling the displacement of the hydraulic pump by generating drive currents based on information, provided by suitable sensors of the vehicle, relating at least to the position of an accelerator pedal of the vehicle, the position of a brake pedal of the vehicle, the position of a FNR switch of the vehicle, the speed of the vehicle and the speed of the engine, wherein the electronic control unit is programmed in such a manner that when it establishes, based on the information received from the FNR switch, that the operator has requested to carry out a direction inversion manoeuvre, it reduces the drive current associated to the current direction first with a first decreasing rate, as long as the vehicle speed is equal to or higher than a first threshold value and then with a second decreasing rate higher than the first one, as soon as the vehicle speed becomes lower than said first threshold value and as long as the vehicle speed is higher than a second threshold value smaller than the first one, and, once the vehicle speed is below said second threshold value, it sets to a minimum value the drive current associated to the current direction and starts to increase the drive current associated to the final direction up to a desired value.

In other words, in a first phase of the direction inversion manoeuvre, when the vehicle speed is still high, the decreasing rate of the drive current associated to the current direction is small, and therefore the decreasing rate of the displacement of the hydraulic pump is correspondingly small. As soon as the vehicle speed decreases below the first threshold value, the decreasing rate of said drive current is increased so as to make the reduction in the displacement of the pump faster. Finally, once the vehicle speed has further decreased and become smaller than the second threshold value, the drive current associated to the current direction is immediately set to minimum and at the same time the electronic control unit starts to generate the drive current associated to the final direction, whereby the displacement of the pump is shifted from positive to negative, or vice versa, passing through zero.

With such a control strategy, the direction inversion manoeuvre can be carried out in a smoother way, i.e. with a smaller jerk perceived by the operator, than in the prior art, but at the same time in a very quick manner, or at least as quick as in the prior art.

An important advantage of the invention over the prior art is that it makes use of the sensors already provided for on board of the vehicle, in particular the vehicle speed sensor, without requiring special additional sensors on the hydraulic pump and/or on the hydraulic motor of the hydrostatic transmission. Accordingly, no additional costs due to the use of special additional sensors are involved.

Preferably, the above-mentioned second threshold value for the vehicle speed is a variable value, which is calculated by the electronic control unit based on the vehicle speed at the time the operator actuates the FNR switch to invert the direction of the vehicle. In particular, the higher the vehicle speed at the time the operator commands the direction inversion, the higher the second threshold value.

Further features and advantages of the present invention will become more apparent from the following detailed description, given purely by way of non-limiting example with reference to the appended drawings, where:
Figure 1 shows a compact wheel loader as an example of a work vehicle to which the present invention is applicable;
Figure 2 schematically shows a hydrostatic transmission according to the present invention; and
Figure 3 is a diagram showing an example of evolution over time of the vehicle speed, of the engine speed, of the drive current associated to the forward direction and of the drive current associated to the rearward direction during a direction inversion manoeuvre carried out with a work vehicle provided with a hydrostatic transmission according to the present invention.

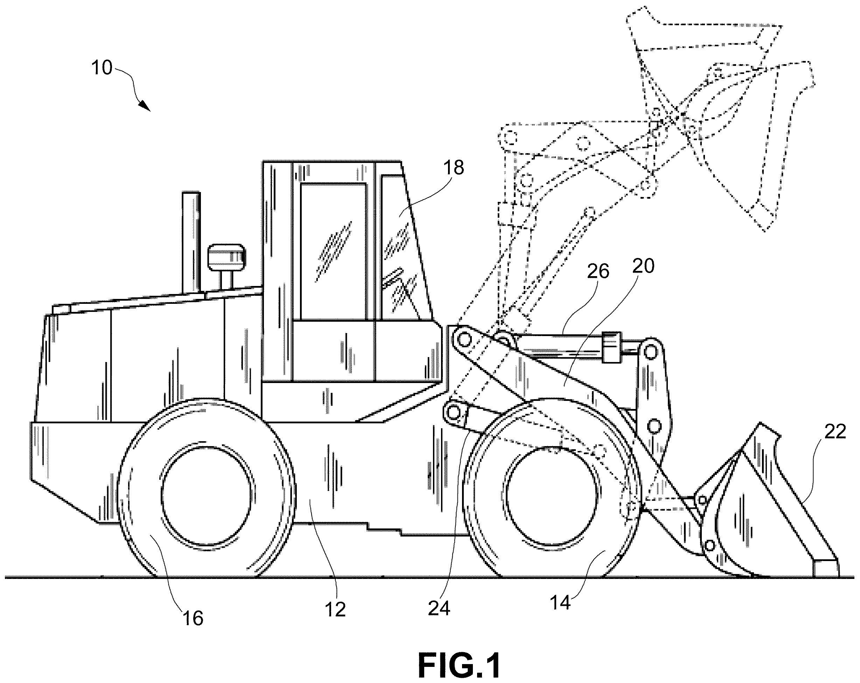

With reference first to Figure 1, a work vehicle is generally indicated at 10. The work vehicle illustrated in Figure 1 is a so-called compact wheel loader. However, the invention is not limited to such a kind of work vehicle, but is applicable to any other kind of work vehicle.

In per-se-known manner, the work vehicle 10 comprises a body or frame 12, a pair of front wheels (non-driving wheels) 14, a pair of rear wheels (driving wheels) 16, an operator's cab 18 carried by the body 12, a pair of lift arms 20 (only one of which is shown in Figure 1) attached to the front side of the body 12 and hingedly connected thereto so as to be rotatable about a first axis of rotation directed transversely, a working implement 22, such as for example a bucket, attached to the front ends (free ends) of the lift arms 20 and hingedly connected thereto so as to be rotatable about a second axis of rotation parallel to the first one, a pair of first hydraulic cylinders 24 (only one of which is shown in Figure 1), each of which is interposed between the body 12 and a respective one of the lift arms 20 and is operable to cause rotary movement of the respective lift arm 20 relative to the body 12 about the first axis of rotation, and one or two second hydraulic cylinders 26 interposed between the lift arms 20 and the working implement 22 and operable to cause rotary movement of the working implement 22 relative to the lift arms 20 about the second axis of rotation.

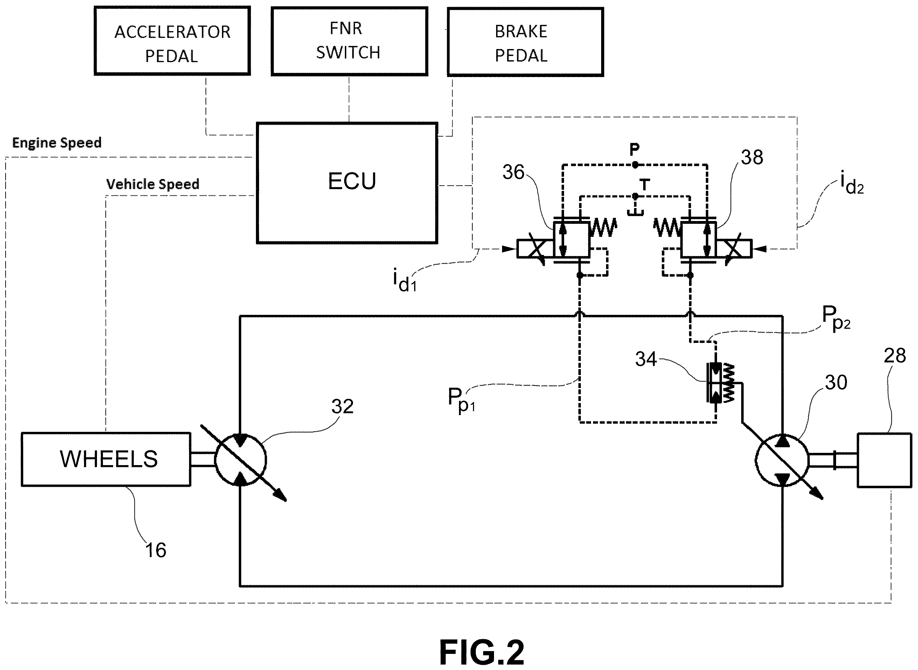

The hydraulic pressure required for the first and second hydraulic cylinders 24 and 26 to operate the lift arms 20 and the working implement 22 is produced by a hydraulic pump (not shown, but of per-se-known type) driven by an internal combustion engine 28 (hereinafter simply referred to as engine) of the vehicle, the engine 28 being schematically shown in figure 2.

As illustrated in Figure 2, the engine 28 is also used to drive the rear wheels 16 by means of a hydrostatic transmission comprising a hydraulic pump 30 and a hydraulic motor 32 hydraulically connected to each other. The hydraulic pump 30 is mechanically connected to the engine 28 to be driven by the latter, while the hydraulic motor 32 is mechanically connected to the rear wheels 16 to drive the latter.

The hydraulic pump 30 is an electronically-controlled variable displacement hydraulic pump, whose displacement is varied by means of a double acting spool 34 under control of an electronic control unit ECU. To this end, the electronic control unit ECU is configured to generate drive currents i_{d1} and i_{d2} for a pair of solenoid valves 36 and 38, and based on the drive currents i_{d1} and i_{d2} generated by the electronic control unit ECU the solenoid valves 36 and 38 generate in turn pilot pressures pₚ₁ and pₚ₂ for the double acting spool 34. Depending on the pilot pressures pₚ₁ and pₚ₂ generated by the solenoid valves 36 and 38, the double acting spool 34 determines the displacement of the hydraulic pump 30, which may take either positive or negative values, corresponding to the forward and rearward direction of the work vehicle 10, respectively.

On the other hand, the hydraulic motor 32 is a hydraulically-controlled variable displacement hydraulic motor, whose displacement is varied under control of hydraulic control means (not shown, but of per-se-known type).

The electronic control unit ECU is configured to suitably control the solenoid valves 36 and 38, and therefore to suitably control the displacement of the hydraulic pump 30, based on information (coming from suitable sensors connected to the electronic control unit ECU) relating to the position of the accelerator pedal of the vehicle, the position of the brake pedal of the vehicle, the position of a FNR (Forward-Neutral-Reverse) switch of the vehicle, the vehicle speed and the engine speed (i.e. the number of revolutions per minute of the engine 28).

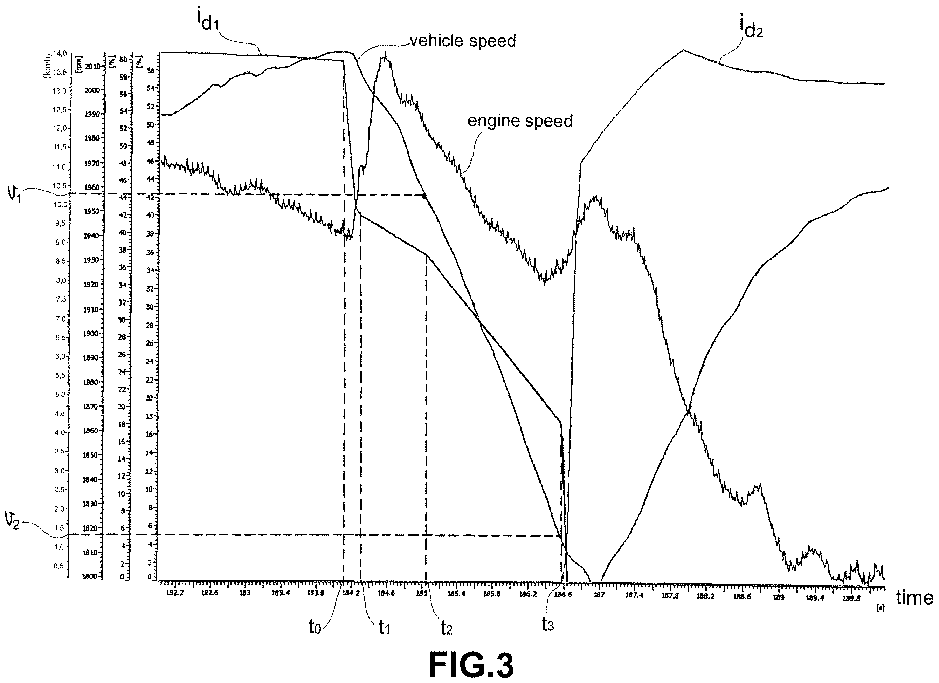

In particular, in order to reduce the jerk perceived by the operator during a direction inversion manoeuvre, according to the invention the electronic control unit ECU is configured to control the displacement of the hydraulic pump 30 during such manoeuvre as explained in detail here below with reference to the diagram shown in Figure 3. The following explanation refers to the case of a direction inversion from the forward direction as current direction to the rearward direction as final direction, but similar considerations apply to the opposite case of a direction inversion from the rearward direction to the forward direction.

When the electronic control unit ECU establishes, based on the information received from the FNR switch, that the operator has requested to carry out a direction inversion manoeuvre, it starts (see time t=t₀) to reduce the drive current i_{d1} associated to the forward direction, i.e. the drive current supplied to the solenoid valve 36. After a short initial phase (from time t=t₀ to time t=t₁) during which the drive current i_{d1} is reduced with a very high decreasing rate (this initial phase is required in particular if the vehicle speed at time t=t₀ is high, in order to quickly reduce the vehicle speed), the drive current i_{d1} is then reduced (from time t=t₁ to time t=t₂) with a first decreasing rate, as long as the vehicle speed is equal to or higher than a first threshold value v₁. Once the vehicle speed has reached first threshold value v₁, the drive current i_{d1} is then reduced (from time t=t₂ to time t=t₃) with a second decreasing rate higher than the first one, as long as the vehicle speed is higher than a second threshold value v₂ smaller than the first threshold value v₁. Once the vehicle speed reaches the second threshold value v₂ (see time t=t₃), then the drive current i_{d1} is immediately set to a minimum value, while at the same time the electronic control unit ECU starts to increase the drive current i_{d2} associated to the rearward direction (i.e. the drive current supplied to the solenoid valve 38).

In other words, in a first phase of the direction inversion manoeuvre (from time t=t₁ to time t=t₂), when the vehicle speed is higher than the first threshold value v₁, the decreasing rate of the drive current i_{d1} associated to the forward direction is small, and therefore the decreasing rate of the displacement of the hydraulic pump 30 is correspondingly small. As soon as the vehicle speed decreases below the first threshold value v₁, the decreasing rate of the drive current i_{d1} is increased so as to make the reduction in the displacement of the hydraulic pump 30 faster (see time interval from time t=t₂ to time t=t₃). Finally, once the vehicle speed has further decreased and become smaller than the second threshold value v₂ (time t=t₃), the drive current i_{d1} is immediately set to minimum and at the same time the electronic control unit ECU starts to generate the drive current i_{d2} associated to the rearward direction, whereby the displacement of the pump is shifted from positive to negative, passing through zero, and the vehicle starts to move rearwards.

Preferably, the second threshold value v₂ for the vehicle speed is a variable value, which is calculated by the electronic control unit ECU based on the vehicle speed at the time (indicated at t₀ in the diagram of Figure 3) the operator actuates the FNR switch to invert the direction of the vehicle. In particular, the higher the vehicle speed at the time the operator commands the direction inversion, the higher the second threshold value v₂.

By virtue of the present invention, therefore, the direction inversion manoeuvre is carried out in a very smooth way, thereby minimizing the jerk perceived by the operator during the manoeuvre. Nevertheless, the manoeuvre is carried out quickly, as the decreasing rate of the drive current associated to the current direction is increased (and therefore the displacement of the hydraulic pump decreased), as soon as the vehicle speed has reached a sufficiently low value (namely, a value lower than the first threshold value v₁), and then, as soon as the vehicle speed has reached the second threshold value v₂, the drive current associated to the current direction is immediately set to minimum.

This is obtained using the sensors already provided for on board of the vehicle, in particular the vehicle speed sensor, without therefore requiring special additional sensors on the hydraulic pump and/or on the hydraulic motor of the hydrostatic transmission. Accordingly, no additional costs due to the use of special additional sensors are involved.

Naturally, the principle of the invention remaining unchanged, the embodiments and the constructional details may vary widely from those described and illustrated purely by way of non-limiting example, without thereby departing from the scope of the invention as defined in the appended claims.

## Claims

1. Hydrostatic transmission for a work vehicle (10), comprising a variable displacement electronically-controlled hydraulic pump (30) and a variable displacement hydraulically-controlled hydraulic motor (32) hydraulically connected to each other,
wherein the hydraulic pump (30) is arranged to be mechanically coupled to an internal combustion engine (28) of the vehicle (10), and the hydraulic motor (32) is arranged to be mechanically connected to driving wheels (16) of the vehicle (10),
wherein the hydrostatic transmission further comprises an electronic control unit (ECU) for controlling the operation of the hydrostatic transmission, the electronic control unit (ECU) being configured to generate drive currents (i_{d1}, i_{d2}) for adjusting the displacement of the hydraulic pump (30) based on information, provided by suitable sensors of the vehicle (10), relating to the position of an accelerator pedal of the vehicle (10), the position of a brake pedal of the vehicle (10), the position of a FNR (Forward-Neutral-Reverse) switch of the vehicle (10), the speed of the vehicle (10) and the speed of the engine (28), and
wherein the electronic control unit (ECU) is programmed in such a manner that when it establishes, based on the information received from the FNR switch, that the operator has requested to carry out a direction inversion manoeuvre from the current direction to a final direction opposed to the current one, and the electronic control unit (ECU) being **characterized in that** it reduces the drive current (i_{d1}) associated to the current direction first with a first decreasing rate, as long as the vehicle speed is equal to or higher than a first threshold value (v₁) and then with a second decreasing rate higher than the first one, as soon as the vehicle speed becomes lower than said first threshold value (v₁) and as long as the vehicle speed is higher than a second threshold value (v₂) smaller than the first one (v₁), and, once the vehicle speed is below said second threshold value (v₂), it sets to a minimum value the drive current (i_{d1}) associated to the current direction and starts to increase the drive current (i_{d2}) associated to the final direction up to a desired value.

2. Hydrostatic transmission according to claim 1, further comprising a displacement adjustment device (34) associated to the hydraulic pump (30) for adjusting the displacement thereof, and a pair of solenoid valves (36, 38) arranged to receive the drive currents (i_{d1}, i_{d2}) generated by the electronic control unit (ECU) and to generate, depending on said drive currents (i_{d1}, i_{d2}), pilot pressures for controlling the displacement adjustment device (34).

3. Hydrostatic transmission according to claim 1 or claim 2, wherein the electronic control unit (ECU) is programmed to calculate said second threshold value (v₂) based on, in particular proportionally to, the vehicle speed at the time the operator actuates the FNR switch to invert the direction of the vehicle.

4. Hydrostatic transmission according to any one of the preceding claims, wherein the electronic control unit (ECU) is programmed so that, before reducing the drive current (i_{d1}) associated to the current direction with said first decreasing rate, it reduces said drive current (i_{d1}) with a decreasing rate higher than said first decreasing rate up to a value of the vehicle speed higher than said first threshold value (v₁).

5. Work vehicle (10), in particular compact wheel loader, comprising driving wheels (16), a hydrostatic transmission according to any one of the preceding claims, and an internal combustion engine (28) for driving said driving wheels (16) through the hydrostatic transmission, wherein said driving wheels (16) are mechanically coupled to the hydraulic motor (32) of the hydrostatic transmission, and wherein the internal combustion engine (28) is mechanically coupled to the hydraulic pump (30) of the hydrostatic transmission.

6. Method for controlling a hydrostatic transmission for a work vehicle (10) during a direction inversion manoeuvre from a current direction to a final direction opposed to the current one, wherein the hydrostatic transmission comprises an electronically-controlled variable displacement hydraulic pump (30) and a hydraulically-controlled variable displacement hydraulic motor (32) hydraulically connected to each other, the hydraulic pump (30) being arranged to be mechanically coupled to an internal combustion engine (28) of the vehicle (10) and the hydraulic motor (32) being arranged to be mechanically connected to driving wheels (16) of the vehicle (10),
the method comprising the steps of:
a) establishing whether a direction inversion manoeuvre has been requested by the operator and, in the affirmative;
the method being **characterized in**:
b) reducing the drive current (i_{d1}) associated to the current direction first with a first decreasing rate, as long as the vehicle speed is equal to or higher than a first threshold value (v₁) and then with a second decreasing rate higher than the first one, as soon as the vehicle speed becomes lower than said first threshold value (v₁) and as long as the vehicle speed is higher than a second threshold value (v₂) smaller than the first one (v₁), and, once the vehicle speed is below said second threshold value (v₂), it sets to a minimum value the drive current (i_{d1}) associated to the current direction and starts to increase the drive current (i_{d2}) associated to the final direction up to a desired value.

7. Method according to claim 6, wherein said second threshold value (v₂) is calculated based on, in particular proportional to, the vehicle speed at the time the operator actuates the FNR switch to invert the direction of the vehicle.

8. Method according to claim 6 or claim 7, wherein before the drive current (i_{d1}) associated to the current direction is reduced with said first decreasing rate, it is reduced with a decreasing rate higher than said first decreasing rate up to a value of the vehicle speed higher than said first threshold value (v₁).

## Patentansprüche

1. Hydrostatisches Getriebe für ein Arbeitsfahrzeug (10) mit einer elektronisch gesteuerten Hydraulik-Verstellpumpe (30) und einem elektronisch gesteuerten Hydraulik-Verstellmotor (32), die hydraulisch miteinander verbunden sind,
wobei die Hydraulikpumpe (30) angeordnet ist, um mechanisch mit einem Verbrennungsmotor (28) des Fahrzeugs (10) gekoppelt zu sein, und wobei der Hydraulikmotor (32) angeordnet ist, um mechanisch mit Antriebsrädern (16) des Fahrzeugs (10) verbunden zu sein,
wobei das hydrostatische Getriebe des Weiteren eine elektronische Steuereinheit (ECU) zur Steuerung des Betriebs des hydrostatischen Getriebes aufweist, wobei die elektronische Steuereinheit (ECU) dazu eingerichtet ist, Antriebsströme (i_{d1}, i_{d2}) zum Einstellen der Verschiebung der Hydraulikpumpe (30) basierend auf Daten zu erzeugen, die von geeigneten Sensoren des Fahrzeugs (10) bereitgestellt werden, die die Stellung eines Fahrpedals des Fahrzeugs (10), die Stellung eines Bremspedals des Fahrzeugs (10), die Stellung eines FNR-Schalters (Vorwärts-Neutral-Rückwärts) des Fahrzeugs (10), der Geschwindigkeit des Fahrzeugs (10) und der Geschwindigkeit des Motors (28) betreffen, und
wobei die elektronische Steuereinheit (ECU) derart programmiert ist, dass, wenn sie basierend auf den vom FNR-Schalter empfangenen Daten feststellt, dass die Bedienperson angefordert hat, ein Richtungswechselmanöver aus der aktuellen Richtung in eine der aktuellen Richtung entgegengesetzte finale Richtung durchzuführen, und
wobei die elektronische Steuereinheit (ECU) **dadurch gekennzeichnet ist, dass**
sie den Antriebsstrom (i_{d1}), der mit der aktuellen Richtung verbunden ist, zuerst mit einer ersten Reduktionsrate reduziert, solange die Fahrzeuggeschwindigkeit gleich oder höher als ein erster Schwellenwert (v₁) ist, und anschließend mit einer zweiten Reduktionsrate reduziert, die höher als die erste ist, sobald die Fahrzeuggeschwindigkeit niedriger als der erste Schwellenwert (v₁) wird und solange die Fahrzeuggeschwindigkeit höher ist als ein zweiter Schwellenwert (v₂), der kleiner ist als der erste Schwellenwert (v₁), und, sobald die Fahrzeuggeschwindigkeit unterhalb des zweiten Schwellenwertes (v₂) ist, sie den Antriebsstrom (i_{d1}), der mit der aktuellen Richtung verbunden ist, auf einen Minimalwert setzt und beginnt, den Antriebsstrom (i_{d2}), der mit der finalen Richtung verbunden ist, auf einen gewünschten Wert zu erhöhen.

2. Hydrostatisches Getriebe nach Anspruch 1, das des Weiteren eine Verschiebungseinstellungsvorrichtung (34), die mit der Hydraulikpumpe (30) zum Einstellen deren Verschiebung verbunden ist, und ein paar von Magnetventilen (36, 38) aufweist, die angeordnet sind, um die Antriebsströme (i_{d1}, i_{d2}) zu empfangen, die von der elektronischen Steuereinheit (ECU) erzeugt wurden, und um abhängig von den Antriebsströmen (i_{d1}, i_{d2}) Steuerdrücke zur Steuerung der Verschiebungseinstellungsvorrichtung (34) zu erzeugen.

3. Hydrostatisches Getriebe nach Anspruch 1 oder Anspruch 2, wobei die elektronische Steuereinheit (ECU) programmiert ist, um den zweiten Schwellenwert (v₂) basierend auf, insbesondere proportional zu, der Fahrzeuggeschwindigkeit zu dem Zeitpunkt zu berechnen, bei dem die Bedienperson den FNR-Schalter betätigt, um die Richtung des Fahrzeugs umzukehren.

4. Hydrostatisches Getriebe nach einem der vorhergehenden Ansprüche, wobei die elektronische Steuereinheit (ECU) programmiert ist, dass sie, bevor der Antriebsstrom (i_{d1}), der mit der aktuellen Richtung mit der ersten Reduktionsrate verbunden ist, reduziert wird, den Antriebsstrom (i_{d1}) mit einer Reduktionsrate reduziert, die höher ist als die erste Reduktionsrate bis zu einem Wert der Fahrzeuggeschwindigkeit, der höher ist als der erste Schwellenwert (v₁).

5. Arbeitsfahrzeug (10), insbesondere Kompaktradlader, der Antriebsrädern (16), ein hydrostatisches Getriebe nach einem der vorhergehenden Ansprüche und einen Verbrennungsmotor (28) zum Antreiben der Antriebsräder (16) über das hydrostatische Getriebe aufweist, wobei die Antriebsräder (16) mechanisch mit dem Hydraulikmotor (32) des hydrostatischen Getriebes gekoppelt sind, und wobei der Verbrennungsmotor (28) mechanisch mit der Hydraulikpumpe (30) des hydrostatischen Getriebes gekoppelt ist.

6. Verfahren zur Steuerung eines hydrostatischen Getriebes für ein Arbeitsfahrzeug (10) während eines Richtungsumkehrungsmanövers aus einer aktuellen Richtung in eine finale Richtung, die der aktuellen Richtung entgegengesetzt ist, wobei das hydrostatische Getriebe eine elektronisch gesteuerte Hydraulik-Verstellpumpe (30) und einen elektronisch gesteuerten Hydraulik-Verstellmotor (32), die hydraulisch miteinander verbunden sind, aufweist, wobei die Hydraulikpumpe (30) angeordnet ist, um mechanisch mit einem Verbrennungsmotor (28) des Fahrzeugs (10) gekoppelt zu sein, und wobei der Hydraulikmotor (32) angeordnet ist, um mechanisch mit Antriebsrädern (16) des Fahrzeugs (10) verbunden zu sein,
wobei das Verfahren folgende Schritte aufweist:
a) Feststellen, ob ein Richtungsumkehrungsmanöver durch die Bedienperson angefordert wurde, und wenn ja;
das Verfahren **gekennzeichnet ist durch**:
b) Reduzieren des Antriebsstroms (i_{d1}), der mit der aktuellen Richtung verbunden ist, zuerst mit einer ersten Reduktionsrate, solange die Fahrzeuggeschwindigkeit gleich oder höher als ein erster Schwellenwert (v₁) ist, und anschließend mit einer zweiten Reduktionsrate, die höher als die erste ist, sobald die Fahrzeuggeschwindigkeit geringer wird als der erste Schwellenwert (v₁) und solange die Fahrzeuggeschwindigkeit höher ist als ein zweiter Schwellenwert (v₂), der kleiner ist als der erste Schwellenwert (v₁), und, sobald die Fahrzeuggeschwindigkeit unter dem zweiten Schwellenwert (v₂) liegt, den Antriebsstrom (i_{d1}), der mit der aktuellen Richtung verbunden ist, auf einen Minimalwert einstellt und beginnt, den Antriebsstrom (i_{d2}), der mit der finalen Richtung verbunden ist, bis zu einem gewünschten Wert zu erhöhen.

7. Verfahren nach Anspruch 6, wobei der zweite Schwellenwert (v₂) basierend auf, insbesondere proportional ist zu, der Fahrzeuggeschwindigkeit zu dem Zeitpunkt berechnet wird, zu dem die Bedienperson den FNR-Schalter betätigt, um die Richtung des Fahrzeugs umzukehren.

8. Verfahren nach Anspruch 6 oder Anspruch 7, wobei, bevor der Antriebsstrom (i_{d1}), der mit der aktuellen Richtung verbunden ist, mit der ersten Reduktionsrate reduziert wird, der Antriebsstrom (i_{d1}) mit einer Reduktionsrate reduziert wird, die höher ist als die erste Reduktionsrate bis zu einem Wert der Fahrzeuggeschwindigkeit, der höher ist als der erste Schwellenwert (v₁).

## Revendications

1. Transmission hydrostatique pour véhicule de travail (10), comprenant une pompe hydraulique à cylindrée variable à commande électronique (30) et un moteur hydraulique à cylindrée variable à commande électronique (32) connectés de manière hydraulique l'un à l'autre,
dans laquelle la pompe hydraulique (30) est agencée pour être couplée mécaniquement à un moteur à combustion interne (28) du véhicule (10), et le moteur hydraulique (32) est agencé pour être relié mécaniquement aux roues motrices (16) du véhicule (10),
dans laquelle la transmission hydrostatique comprend en outre une unité de commande électronique (ECU) destinée à commander le fonctionnement de la transmission hydrostatique, l'unité de commande électronique (ECU) étant configurée pour générer des courants d'attaque (i_{d1}, i_{d2}) pour ajuster le mouvement de la cylindrée de la pompe hydraulique (30) sur la base d'informations, fournies par des capteurs appropriés du véhicule (10), concernant la position d'une pédale d'accélération du véhicule (10), la position d'une pédale de frein du véhicule (10), la position d'un commutateur position marche avant - point mort - marche arrière du véhicule (10), la vitesse du véhicule (10) et le régime du moteur (28), et
dans laquelle l'unité de commande électronique (ECU) est programmée de telle manière que lorsqu'elle établit, sur la base des informations reçues du commutateur, que l'opérateur a demandé d'effectuer une manœuvre d'inversion de direction de la direction actuelle vers une direction finale opposée à la direction actuelle, et
l'unité de commande électronique (ECU) étant **caractérisée en ce qu'**elle
réduit le courant d'attaque (i_{d1}) associé à la direction actuelle d'abord à un premier taux dégressif, pour autant que la vitesse du véhicule soit égale ou supérieure à une première valeur seuil (vᵢ) et puis à un deuxième taux dégressif supérieur au premier taux, dès que la vitesse du véhicule est inférieure à ladite première valeur seuil (v₁) et pour autant que la vitesse du véhicule soit supérieure à une deuxième valeur seuil (v₂) inférieure à la première (v₁), et, dès que la vitesse du véhicule est inférieure à ladite deuxième valeur seuil (v₂), elle passe à une valeur minimum du courant d'attaque actuel (i_{d1}) associé à la direction actuelle et commence à augmenter le courant d'attaque (i_{d2}) associé à la direction finale jusqu'à la valeur souhaitée.

2. Transmission hydrostatique selon la revendication 1, comprenant en outre un dispositif régulateur de mouvement (34) associé à la pompe hydraulique (30) pour ajuster le mouvement de celle-ci, et une paire d'électrovannes (36, 38) agencées pour recevoir les courants d'attaque (i_{d1}, i_{d2}) générés par l'unité de commande électronique (ECU) et pour générer, en fonction desdits courants d'attaque (i_{d1}, i_{d2}), des pressions pilotes pour commander le dispositif régulateur de mouvement (34).

3. Transmission hydrostatique selon la revendication 1 ou 2, dans laquelle l'unité de commande électronique (ECU) est programmée pour calculer ladite deuxième valeur seuil (v₂) sur la base de et en particulier proportionnellement à la vitesse du véhicule au moment où l'opérateur déclenche le commutateur afin d'inverser la direction du véhicule.

4. Transmission hydrostatique selon l'une quelconque des revendications précédentes, dans laquelle l'unité de commande électronique (ECU) est programmée de telle manière que, avant de réduire le courant d'attaque (i_{d1}) associé à la direction actuelle en fonction dudit premier taux dégressif, elle réduit ledit courant d'attaque (i_{d1}) à un taux dégressif supérieur audit premier taux dégressif afin d'arriver à une valeur de la vitesse du véhicule t supérieure à ladite première valeur seuil (v₁).

5. Véhicule de travail (10), en particulier un chargeur sur pneus compact, comprenant des roues motrices (16), une transmission hydrostatique selon l'une quelconque des revendications précédentes, et un moteur à combustion interne (28) pour entraîner lesdites roues motrices (16) par le biais de la transmission hydrostatique, dans lequel lesdites roues motrices (16) sont reliées mécaniquement au moteur hydraulique (32) de la transmission hydrostatique, et dans lequel le moteur à combustion interne (28) est relié mécaniquement à la pompe hydraulique(30) de la transmission hydrostatique.

6. Procédé de commande d'une transmission hydrostatique pour véhicule de travail (10) durant la manœuvre d'inversion de direction d'une direction actuelle vers une direction finale opposée à la direction actuelle, dans lequel la transmission hydrostatique comprend une pompe hydraulique à cylindrée variable à commande électronique (30) et un moteur hydraulique à cylindrée variable à commande hydraulique (32) reliés de manière hydraulique l'un à l'autre, la pompe hydraulique (30) étant agencée afin d'être couplée mécaniquement à un moteur à combustion interne (28) du véhicule (10) et le moteur hydraulique (32) étant agencé pour être relié mécaniquement aux roues motrices (16) du véhicule (10),
le procédé comprenant les étapes consistant à :
a) déterminer si une manœuvre d'inversion de direction a été demandée par l'opérateur et, dans l'affirmative ;
le procédé étant caractérisé à :
b) réduire le courant d'attaque (i_{d1}) associé à la direction actuelle d'abord à un premier taux dégressif, tant que la vitesse du véhicule est égale ou supérieure à une première valeur seuil (v₁) et puis à un deuxième taux dégressif supérieur au premier taux, dès que la vitesse du véhicule est inférieure à ladite première valeur seuil (v₁) et tant que la vitesse du véhicule est supérieure à une deuxième valeur seuil (v₂) inférieure à la première (v₁), et, dès que la vitesse du véhicule est inférieure à ladite deuxième valeur seuil (v₂), elle passe à une valeur minimum du courant d'attaque (i_{d1}) associé à la direction actuelle et commence à augmenter le courant d'attaque (i_{d2}) associé à la direction finale jusqu'à la valeur souhaitée.

7. Procédé selon la revendication 6, dans lequel ladite deuxième valeur seuil (v₂) est calculée sur la base de, et en particulier proportionnellement à la vitesse du véhicule au moment où l'opérateur déclenche le commutateur afin d'inverser la direction du véhicule.

8. Procédé selon la revendication 6 ou 7, dans lequel avant de réduire le courant d'attaque (i_{d1}) associé à la direction actuelle en fonction du premier taux dégressif, il est réduit à un taux dégressif supérieur audit premier taux dégressif afin d'arriver à une valeur de la vitesse du véhicule supérieure à ladite première valeur seuil (v₁).
